# EUROPÄISCHE PATENTSCHRIFT

(11) **EP 1 079 086 B1**
(45) Veröffentlichungstag und Bekanntmachung des Hinweises auf die Patenterteilung: **27.10.2004**
(21) Anmeldenummer: 00115985.4
(22) Anmeldetag: 26.07.2000
(51) Int. Cl.: F02B 63/00, F02B 67/06, F16H 1/32, F16H 49/00

(54) **Brennkraftmaschine mit einem Nebengetriebe mit einer Elektromaschine**
Internal combustion engine with an electric machine auxiliary drive
Moteur à combustion interne avec un entraînement auxiliaire avec une électro-machine

(30) Priorität: 21.08.1999 DE 19939813
(43) Veröffentlichungstag der Anmeldung: 28.02.2001
(73) Patentinhaber: Bayerische Motoren Werke Aktiengesellschaft, 80809 München (DE)
(72) Erfinder: Ohnemus, Ulrich, 82285 Hattenhofen (DE)

(56) Entgegenhaltungen:
- DE-A- 2 545 681
- US-A- 132 604
- US-A- 5 132 604
- US-A- 5 405 296
- PATENT ABSTRACTS OF JAPAN vol. 1996, no. 05, 31. Mai 1996 (1996-05-31) & JP 08 014145 A (NIPPONDENSO CO LTD), 16. Januar 1996 (1996-01-16)

## Beschreibung

Die Erfindung betrifft eine Brennkraftmaschine mit einem an ein Ende der Brennkraftmaschinen-Kurbelwelle angekoppelten Nebengetriebe, in das eine wahlweise als Elektromotor oder als elektrischer Stromgenerator betreibbare Elektromaschine sowie ein anzutreibendes Hilfsaggregat eingebunden ist, wobei das Nebengetriebe über eine schaltbare Kupplung mit der Kurbelwelle verbindbar ist, und wobei zwischen dem Nebengetriebe und der Kurbelwelle ein Übersetzungsgetriebe nach Art eines Planetengetriebes, insbesondere in Form eines Gleitkeilgetriebes oder eines HIRN-Getriebes oder eines Harmonic-Drive-Getriebes vorgesehen ist, und geht von unserer mit dem gleichen Anmeldetag eingereichten deutschen Patentanmeldung mit dem Titel "Brennkraftmaschine zum Antrieb eines Kraftfahrzeuges" (amtliches Aktenzeichen 199 .. ...) aus.

In dieser genannten Patentanmeldung ist eine Brennkraftmaschine beschrieben, bei welcher an ein Ende der Brennkraftmaschinen-Abtriebswelle bzw. Kurbelwelle ein Fahrzeugantriebs-Getriebe angekoppelt ist und die ebenfalls mit einer über ein Nebengetriebe mit der Kurbelwelle verbundenen Elektromaschine versehen ist, wobei die Elektromaschine wahlweise als Elektromotor und somit auch als Anlassermotor oder als Stromgenerator betreibbar ist. Dabei ist das als endloses Zugmittelgetriebe oder Rädergetriebe ausgebildete Nebengetriebe mit der Kurbelwelle der Brennkraftmaschine an deren dem Fahrzeugantriebs-Getriebe gegenüberliegenden Ende über eine schaltbare Kupplung verbindbar, wobei in das Nebengetriebe zumindest ein weiteres mechanisch antreibbares Hilfsaggregat des Kraftfahrzeuges, insbesondere der Kompressor einer Fahrzeug-Klimaanlage eingebunden ist. Auf diese Weise kann bei stillstehender Brennkraftmaschine die Elektromaschine den Kompressor bzw. allgemein das Hilfsaggregat antreiben, so daß bspw. die Fahrzeug-Klimaanlage auch bei abgeschalteter Brennkraftmaschine betreibbar ist.

JP 08 014 145 A zeigt weiterhin eine Brennkraftmaschine, bei der über einen Riemen ein Motorgenerator angetrieten wird, wobei eine elektromagnetische Kupplung vorhanden ist.

In der oben genannten deutschen Patentanmeldung 199 .. ... ist auch vorgeschlagen, zwischen dem Nebengetriebe und der Kurbelwelle ein weiteres Übersetzungsgetriebe in Form eines verblockbaren Planetengetriebes, nach Art eines Harmonic-Drive-Getriebes oder eines Gleitkeilgetriebes oder eines HIRN-Getriebes vorzusehen. Bezüglich des Aufbaus und der Funktion eines sog. Gleitkeilgetriebes wird noch auf die DE 25 45 681 C2 verwiesen, während das sog. HIRN-Getriebe im Sonderdruck "Antriebstechnik" aus der DE-Zeitschrift KEM vom November 1996 beschrieben ist. Diese Getriebe haben - ebenso wie das dem Fachmann bekannte "Harmonic-Drive-Getriebe" - den hier entscheidenden Vorteil, daß ihre Antriebswellen und Abtriebswellen koaxial zueinander sind, so daß sie für den vorliegenden Anwendungsfall besonders raumsparend und kompakt angeordnet werden können. Ferner zeichnen sie sich durch geringen benötigten Bauraum sowie durch relativ einfachen Aufbau bei gleichzeitig hoher Zuverlässigkeit aus. Anerkannter-maßen besitzen diese Getriebe eine hohe Leistungsdichte, vorteilhafterweise eine geringe Trägheit der einzelnen ohnehin nur wenigen Bestandteile, und zeichnen sich weiterhin durch geräuscharmen Lauf aus.

Mit der vorliegenden Erfindung soll nun aufgezeigt werden, wie ein solches Übersetzungsgetriebe für den im Oberbegriff des Patentanspruchs 1 angegebenen Anwendungsfall in besonders günstiger (insbesondere raumsparender und einfacher) Weise aufgebaut, gestaltet und angeordnet werden kann (= Aufgabe der vorliegenden Erfindung).
Zur Lösung dieser Aufgabe sind die im kennzeichnenden Teil des ersten Patentanspruches angegebenen Merkmale vorgesehen. Vorteilhafte Ausund Weiterbildungen sind Inhalt der Unteransprüche.

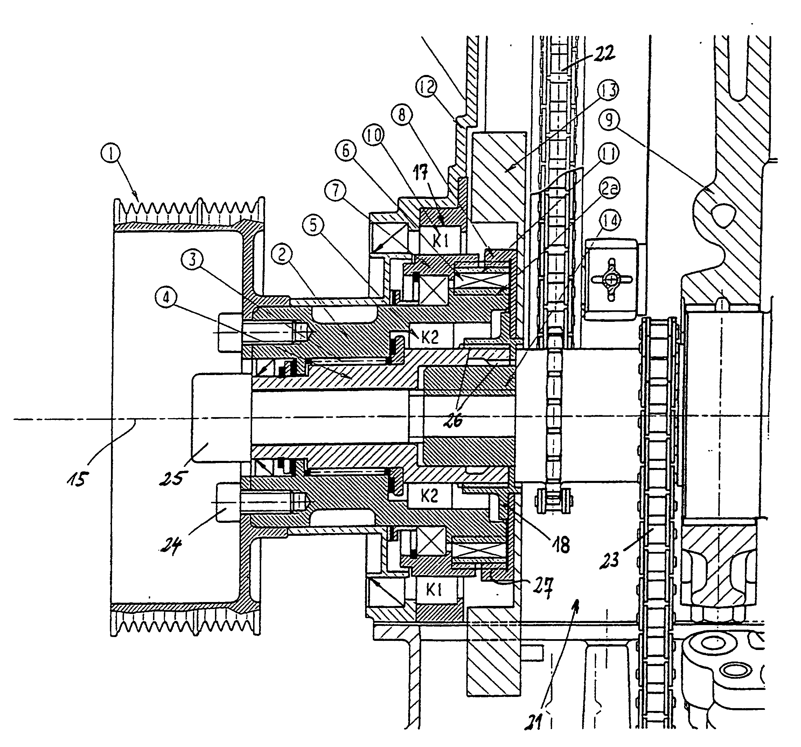

Näher erläutert wird die Erfindung anhand eines bevorzugten Ausführungsbeispieles, wobei in der beigefügten einzigen Figur ein Längsschnitt durch den entsprechenden stirnseitigen Bereich einer erfindungsgemäßen Brennkraftmaschine dargestellt ist. Erfindungswesentlich können dabei sämtliche näher beschriebenen Merkmale sein.

Mit der Bezugsziffer 9 ist das Brennkraftmaschinen-Kurbelgehäuse bzw. dessen Stirnwand bezeichnet, in welcher bzw. in welchem die Kurbelwelle 14 der als Hubkolbenmaschine ausgebildeten Brennkraftmaschine gelagert ist. Dargestellt ist nur der (vordere) Endbereich dieser Kurbelwelle 14 sowie deren Rotationsachse 15; rechtsseitig des dargestellten Bereiches befinden sich die üblichen Kurbelzapfen, an denen wie üblich die in den ebenfalls nicht sichtbaren, in Reihe angeordneten Maschinenzylindem geführten Kolben über Pleuel angelenkt sind.

In der Figurendarstellung linksseitig der Kurbelgehäuse-Stirnwand 9 (d.h. vor derselben) befindet sich ein Kettenkasten 21, der nach vorne hin von einem auf nicht sichtbare Weise mit dem Kurbelgehäuse 9 verbundenen Kettenkastendeckel 12 begrenzt wird. In diesem Kettenkasten 21 laufen zwei von der Kurbelwelle 14 angetriebene Ketten 22, 23, von denen die vordere für den Antrieb der Brennkraftmaschinen-Nockenwelle vorgesehen ist, während die hintere Kette 23 die Ölpumpe der Brennkraftmaschine antreibt (nicht gezeigt).

Außerhalb des Kettenkastens 21, d.h. vor dem Kettenkastendeckel 12 befindet sich ein sog. Nebengetriebe, von welchem lediglich das Treibrad 1 dargestellt ist. Wie ersichtlich handelt es sich hier bei diesem konzentrisch zur Rotationsachse 15 angeordneten Treibrad 1 um ein Poly-V-Riemenrad, über welches ein nicht gezeigter Riemen geführt ist, der weiterhin über ein Treibrad einer nicht gezeigten Elektromaschine sowie über ein Treibrad eines ebenfalls nicht gezeigten Hilfsaggregates geführt ist. Bei letzterem kann es sich beispielsweise um den Kompressor einer Kompressions-Klimaanlage handeln, die in einem Kraftfahrzeug, welches von der erfindungsgemäßen Brennkraftmaschine angetrieben wird, vorgesehen ist. Dabei bilden die genannten drei Treibräder zusammen mit dem genannten Riemen das als endloses Zugmittelgetriebe ausgebildete Nebengetriebe.

Die genannte, im Nebengetriebe eingebundene Elektromaschine soll wahlweise als Elektromotor oder als (elektrischer) Stromgenerator betreibbar sein. Als elektrischer Stromgenerator wird die Elektromaschine bei laufender Brennkraftmaschine betrieben, d.h. die Brennkraftmaschine soll über das Nebengetriebe bzw. über das Treibrad 1 die Elektromaschine antreiben, wobei das Drehzahl-Übersetzungsverhältnis hierfür geeignet gewählt bzw. eingestellt werden sollte. Als Elektromotor wird die Elektromaschine bei stillstehender Brennkraftmaschine betrieben. Dabei kann die Elektromaschine als Anlassermotor für die Brennkraftmaschine fungieren. Auch für diesen Betriebsfall sind die Übersetzungsverhältnisse geeignet zu wählen bzw. einzustellen. Als Elektromotor kann die Elektromaschine aber auch bei stillstehender Brennkraftmaschine betrieben werden und dabei das (zumindest eine) im sog Nebengetriebe angeordnete Hilfsaggregat antreiben. Dabei sollte keine Verbindung zwischen dem Nebengetriebe und der Brennkraftmaschinen-Kurbelwelle bestehen, so daß die Elektromaschine nicht unnötigerweise die Brennkraftmaschine mitschleppen muß.

Die unterschiedlichen benötigten Übersetzungsverhältnisse zwischen der Drehzahl der Kurbelwelle 14 und derjenigen des Treibrades 1 sind nun durch ein sog. Übersetzungsgetriebe, welches nach Art eines Planetengetriebes arbeitet und somit zumindest zwei verschiedene Übersetzungsverhältnisse ermöglicht, erzielbar. Ferner ist die Herstellung bzw. Unterbrechung einer (zumindest in einer Drehrichtung) drehfesten Verbindung zwischen dem Treibrad 1 und der Kurbelwelle 14, bspw. je nachdem ob die Elektromaschine nur das Hilfsaggregat oder auch die Brennkraftmaschine (nämlich zum Anlassen) antreiben soll, mittels einer geeigneten schaltbaren Kupplung erzielbar. Diese besagten Elemente werden nun im Folgenden näher beschrieben:

Wie ersichtlich ist das Treibrad 1 mit einer sog. Nabe 2, die Bestandteil des sog Übersetzungsgetriebes ist, drehfest verbunden, und zwar über eine Stirn-Verschraubung 24. Dabei ist die Nabe 2 konzentrisch zur Rotationsachse 15 auf einem mit der Kurbelwelle 14 drehfest verbundenen Kurbelwellen-Zapfen 4 über ein Wälzlager 3 (alternativ über ein Gleitlager) drehbar gelagert. Dieser Kurbelwellen-Zapfen 4 ist mittels einer Axial-Schraube 25 an der Kurbelwelle 14 befestigt, wobei die drehfeste Verbindung über Reibschluß und/oder über eine übliche Verdrehsicherung 26 hergestellt wird.

Zwischen der Nabe 2 und dem Kurbelwellen-Zapfen 4 (und somit der Kurbelwelle 14) ist konzentrisch zu diesen Elementen eine Überholkupplung 5 angeordnet. Diese auch als Kupplung K2 bezeichnete Überholkupplung 5 wird selbsttätig geschlossen, sobald von der Kurbelwelle 14 ein Antriebsmoment an die Nabe 2 abgegeben wird, d.h sobald die Brennkraftmaschine läuft Hingegen ist diese K2-Kupplung 5 geöffnet, wenn von der Nabe 2 ein Drehmoment abgegeben wird, welches höher als dasjenige der Kurbelwelle 14 bzw. des Kurbelwellen-Zapfens 4 ist. In anderen Worten ausgedrückt ist die K2-Kupplung 5 geschlossen, falls die Drehzahl der Kurbelwelle 14 (bzw. des Kurbelwellen-Zapfens 4) die Drehzahl der Nabe 2 (bei gleichem Drehsinn) übersteigt und andernfalls, falls die Kurbelwellen-Drehzahl geringer als diejenige der Nabe 2 ist, automatisch geöffnet.

Die Nabe 2 ist in ihrem dem Treibrad 1 gegenüberliegenden Endabschnitt mit einem im Querschnitt elliptischen Absatz 2a versehen, was durch die mit dem Pfeil 2a gekennzeichnete, parallel zur Rotationsachse 15 verlaufende gestrichelte Linie(n) kenntlich gemacht ist. Dies bedeutet, daß in der in der Figur sichtbaren Schnittebene die Nabe 2 die durch die Schraffur dargestellte Form besitzt. Dagegen liegt in einer gegenüber dieser dargestellten Schnittebene um die Rotationsachse 15 um 90° gedrehten Schnittebene die durch die näher zur Rotationsachse 15 liegenden gestrichelten Linien (auf welche der Pfeil 2a deutet) beschriebene Form dieses Absatzes 2a vor.

Im Bereich dieses elliptischen Absatzes 2a, d.h. in demjenigen Abschnitt der Nabe 2, der bezüglich der Rotationsachse 15 als Mittelpunkt einen elliptischen Querschnitt aufweist, ist auf der Nabe 2 unter Zwischenschaltung eines Dünnringlagers 6 ein sog. Flexring 11 angeordnet. Dieser flexible Flexring 11 ist außenseitig (d.h. auf seiner der Nabe 2 abgewandten Oberfläche) mit einer Verzahnung versehen, die jeweils über ihrem Umfang betrachtet aufgrund des elliptischen Querschnittes der Nabe 2 sowie des sich hieran anpassenden elastisch verformbaren Flexringes 11 nur abschnittsweise mit den kreisförmig angeordneten Innenverzahnungen zweier in diesem Abschnitt nebeneinander angeordneter Hohlräder 7, 8 kämmt. Dieser Sachverhalt ist wie üblich durch eine gestrichelte, parallel zur Rotationsachse 15 verlaufend Linie 27 dargestellt, die die nebeneinander liegenden Verzahnungen der Hohlräder 7, 8 sowie derjenigen des Flexringes 11 verdeutlicht, wobei die Zähnezahl im ersten Hohlrad 7 ungleich derjenigen im zweiten Hohlrad 8 ist, so daß über den Flexring 11 eine Übersetzung in der Drehbewegung der beiden Hohlräder 7, 8 bewirkt wird. Dabei sind die beiden innenverzahnten, kreisförmigen Hohlräder 7, 8 konzentrisch zur Rotationsachse 15 angeordnet.

Das erste, hier vordere oder linksseitige Hohlrad 7 ist quasi in einer konzentrisch hierzu im Kettenkastendeckel 12 (und somit im Brennkraftmaschinen-Gehäuse) vorgesehenen Aufnahme 17 drehbar gelagert, und zwar unter Zwischenschaltung einer schaltbaren Kupplung 10. Diese ringförmig ausgebildete und ebenfalls konzentrisch zur Rotationsachse 15 angeordnete schaltbare Kupplung 10, die auch als Kupplung K1 bezeichnet ist, befindet sich somit zwischen der Außenseite des ersten Hohlrades 7 und der im Kettenkastendeckel 12 vorgesehenen Aufnahme 17. Das zweite Hohlrad 8 ist mit der Kurbelwelle 14 drehfest verbunden, und zwar über einen sog Tragring 18, der (abermals konzentrisch zur Rotationsachse 15) über eine übliche Verdrehsicherung 26 auf dem Kurbelwellen-Zapfen 14 angeordnet ist.

Anhand der bzw. mit den soweit erläuterten Elementen wird nun der Anlassvorgang der Brennkraftmaschine, bei welchem über das Treibrad 1 (bzw. über das weiter oben genannte Nebengetriebe) über die (ebenfalls weiter oben genannte) dann als Elektromotor betriebene Elektromaschine ein Drehmoment in das System eingeleitet wird, beschrieben:

Für diesen Anlassvorgang wird die schaltbare K1-Kupplung 10 zunächst geschlossen, so daß sich das Hohlrad 7 am Kettenkastendeckel 12 (und somit am Brennkraftmaschinen-Gehäuse) abstützt bzw. verblockt ist. Wie bereits erläutert wurde, ist die Kupplung 5 geöffnet, solange die Drehzahl der Kurbelwelle 14 unterhalb derjenigen der Nabe 2, die ja drehfest mit dem Treibrad 1 verbunden ist, liegt. Die durch die Elektromaschine über das Nebengetriebe hervorgerufene Drehbewegung des Treibrades 1 wird somit von der Nabe 2 unter Übersetzung in den Verzahnungen 27 auf das Hohlrad 8 und somit auf die Kurbelwelle 14 übertragen. Entsprechend den gewählten Zähnezahlverhältnissen in den Verzahnungen 27 des Hohlrades 7 einerseits sowie des Hohlrades 8 andererseits wird das Drehmoment und die Drehzahl vom Treibrad 1 entsprechend auf die Kurbelwelle 14 übersetzt, so daß die Brennkraftmaschine hierdurch angeworfen (d.h. angelassen oder gestartet) wird.

Nach erfolgtem Start der Brennkraftmaschine kann die genannte Elektromaschine als elektrischer Stromgenerator betrieben werden, was nun im Folgenden anhand der bzw. mit den soweit erläuterten Elementen beschrieben wird. Dabei wird über das Treibrad 1 sowie über das weiter oben genannte Nebengetriebe von der Brennkraftmaschine ein Drehmoment an die Elektromaschine abgegeben:
Sobald die Brennkraftmaschine selbsttätig läuft, wird die schaltbare K1-Kupplung 10 geöffnet, so daß das erste Hohlrad 7 gegenüber dem Kettenkastendeckel 12 verdrehbar ist. Wie bereits erläutert wurde, ist die K2-Kupplung 5 geschlossen, sobald die Drehzahl der Kurbelwelle 14 größer ist als diejenige der Nabe 2, bzw. genauer sobald das von der Kurbelwelle 14 abgegebene Drehmoment größer als das der Nabe aufgeprägte Drehmoment ist, was bei laufender Brennkraftmaschine der Fall ist. Aufgrund der geschlossenen K2-Kupplung 5 sowie der geöffneten K1-Kupplung 10 wird die Rotationsbewegung der Kurbelwelle 14 somit direkt auf die Nabe 2 bzw. auf das Treibrad 1 übertragen (und zwar ohne jegliche Übersetzung in den Verzahnungen 27).

Wie eingangs erläutert wurde, soll bei stehender Brennkraftmaschine das Nebengetriebe laufen und somit das Treibrad 1 rotieren können, ohne daß hierbei die Brennkraftmaschinen-Kurbelwelle 14 in Rotation versetzt wird.

Auf diese Weise kann die als Elektromotor betriebene Elektromaschine das ebenfalls im Nebengetriebe eingebundene Hilfsaggregat antreiben. Bei stillstehender Brennkraftmaschine ist die K2-Kupplung 5 geöffnet, wenn über die Nabe 2 ein Drehmoment eingeleitet wird. Wird gleichzeitig die schaltbare K1-Kupplung 10 geöffnet, so kann das Treibrad 1 mit der Nabe 2 frei drehen, ohne diese Drehbewegung auf das (aufgrund des Trägheitsmomentes der Kurbelwelle 14 quasi blockierte) Hohlrad 8 und somit auf die Kurbelwelle 14 zu übertragen.

Die schaltbare K1-Kupplung 10 kann bspw. eine schaltbare TESMA-Freilaufkupplung sein, wie diese in den internationalen Patentanmeldungen WO 99/28644 und WO 99/28645 beschrieben ist, wobei hier nur zwei unterschiedliche Funktionsstellungen benötigt werden, nämlich zum einen "verblockt" bzw. "geschlossen" und zum anderen "offen". Dadurch, daß die schaltbare K1-Kupplung 10 in einem relativ frei zugänglichen, feststehenden Bauelement, nämlich im Kettenkastendeckel 12 angeordnet ist, ist die Verlegung zur Ansteuerung bzw. Betätigung dieser Kupplung 10 unproblematisch. Auch für die K2-Kupplung 5 kann ein TESMA-Freilauf verwendet werden, der lediglich eine Sperr-Richtung aufweist und als Überholfreilaufkupplung arbeitet. Die gleiche Funktion kann aber auch ein einfacher Klemmkörperfreilauf erfüllen.

Mit der Bezugsziffer 13 ist ein Torsionsschwingungsdämpfer bezeichnet, der benachbart zum zweiten Hohlrad 8 drehfest mit der Kurbelwelle 14 verbunden ist. Üblicherweise sind derartige Torsionsschwingungsdämpfer in die Treibräder 1 der als endlose Zugmittelgetriebe ausgebildeten Nebengetriebe integriert, was in der vorliegenden Konstruktion jedoch nicht möglich ist, da das Treibrad 1 gewolltermaßen nicht mehr drehfest mit der Kurbelwelle 14 verbunden ist. Wie ersichtlich ist daher der als separate Rotationsschwungmasse ausgebildete Torsionsschwingungsdämpfer 13 gemeinsam mit dem zweiten Hohlrad 8 am Tragring 18 befestigt, der wie bereits erläutert über eine Verdrehsicherung 26 drehfest mit dem Kurbelwellen-Zapfen 4 (und somit mit der Kurbelwelle 14) verbunden ist. Dabei preßt der Kurbelwellen-Zapfen 14 aufgrund seiner Befestigung mit der Axial-Schraube 25 den Tragring 18 gegen einen nicht näher bezeichneten, jedoch figürlich dargestellten Absatz der Kurbelwelle 14, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Treibrad
- 2: Nabe
- 2a: elliptischer Absatz
- 3: Wälzlager
- 4: Kurbelwellen-Zapfen
- 5: Überhol-Kupplung, auch als K2-Kupplung bezeichnet
- 6: Dünnringlager
- 7: erstes (innenverzahntes) Hohlrad
- 8: zweites (innenverzahntes) Hohlrad
- 9: Brennkraftmaschinen-Kurbelgehäuse bzw. Stirnwand hiervon
- 10: schaltbare Kupplung, auch als K1-Kupplung bezeichnet
- 11: (außenverzahnter) Flexring
- 12: Kettenkastendeckel
- 13: Torsionsschwingungsdämpfer
- 14: Kurbelwelle (der Brennkraftmaschine)
- 15: Rotationsachse (u.a. von 14)
- 17: Aufnahme (für 7 in 12)
- 18: Tragring
- 21: Kettenkasten
- 22: Kette (für Nockenwellenantrieb)
- 23: Kette (für Ölpumpenantrieb)
- 24: Stirn-Verschraubung
- 25: Axial-Schraube
- 26: Verdrehsicherung
- 27: Verzahnungen (zwischen 11 und 7 bzw. 8)

## Patentansprüche

1. Brennkraffmaschine mit einem an ein Ende der Brennkraftmaschinen-Kurbelwelle (14) angekoppelten Nebengetriebe, in das eine wahlweise als Elektromotor oder als elektrischer Stromgenerator betreibbare Elektromaschine sowie ein anzutreibendes Hilfsaggregat eingebunden ist, wobei das Nebengetriebe über eine schaltbare Kupplung (K1, 10) mit der Kurbelwelle (14) verbindbar ist, und wobei zwischen dem Nebengetriebe und der Kurbelwelle ein Übersetzungsgetriebe nach Art eines Planetengetriebes, insbesondere in Form eines Gleitkeilgetriebes oder eines HIRN-Getriebes oder eines Harmonic-Drive-Getriebes vorgesehen ist,
**gekennzeichnet durch** die folgenden Merkmale:
- ein Treibrad (1) des Nebengetriebes ist mit einer Nabe (2) des Übersetzungsgetriebes drehfest verbunden,
- die Nabe (2) ist unter Zwischenschaltung einer Überholkupplung (K2, 5) drehbar auf der Kurbelwelle (14) angeordnet,
- zwischen der abschnittsweise elliptisch geformten Nabe (2) und zwei in diesem Abschnitt nebeneinander angeordneten innenverzahnten Hohlrädem (7, 8) ist ein außenverzahnter Flexring (11) vorgesehen,
- zwischen dem ersten Hohlrad (7) und einer konzentrisch hierzu im Brennkraftmaschinengehäuse vorgesehenen Aufnahme (17) hierfür befindet sich die schaltbare Kupplung (K1, 10), und
- das zweite Hohlrad (8) ist mit der Kurbelwelle (14) drehfest verbunden.

2. Brennkraftmaschine nach Anspruch 1,
**dadurch gekennzeichnet, daß** die Nabe (2) des Übersetzungsgetriebes auf einem mit der Kurbelwelle (14) drehfest verbundenen Kurbelwellen-Zapfen (4) über ein Wälzlager (3) oder ein Gleitlager drehbar gelagert ist.

3. Brennkraftmaschine nach Anspruch 1 oder 2,
**dadurch gekennzeichnet, daß** ein Torsionsschwingungsdämpfer (13) benachbart zum zweiten Hohlrad (8) drehfest mit der Kurbelwelle (14) verbunden ist.

4. Brennkraftmaschine nach einem der vorangegangenen Ansprüche,
**dadurch gekennzeichnet, daß** der Kurbelwellen-Zapfen (4) mittels einer Axial-Schraube (25) an der Kurbelwelle (14) befestigt ist und dabei einen das zweite Hohlrad (8) und den Torsionsschwingungsdämpfer (13) tragenden Tragring (18) gegen einen Absatz der Kurbelwelle (14) preßt.

## Claims

1. An internal combustion engine comprising a secondary drive coupled to one end of the engine crankshaft (14) and incorporating an electric machine, operating as a motor or generator as required, and a driven auxiliary unit, wherein the secondary drive is connectable by a shiftable clutch (K1, 10) to the crankshaft (14) and wherein a transmission gear such as a planetary gear, especially in the form of a sliding-wedge friction gear or an HIRN gear or a harmonic-drive gear, is provided between the secondary drive and the crankshaft, **characterised by** the following features:
- a driving wheel (1) of the secondary drive is co-rotatably connected to a hub (2) on the transmission gear,
- the hub (2) is co-rotatably mounted on the crankshaft (14) with interposition of an overriding clutch (K2, 5),
- an externally toothed flexible ring (11) is provided between the partly elliptical hub (2) and two internally toothed annular gears (7, 8) disposed alongside one another in this portion,
- the shiftable clutch (K1, 10) is disposed between the first annular gear (7) and a recess (17) concentric therewith and provided for it in the engine casing, and
- the second annular gear (8) is co-rotatably connected to the crankshaft (14).

2. An engine in accordance with claim 1, **characterised in that** the hub (2) of the transmission gear is rotatably mounted via a rolling bearing (3) or sliding bearing on a crankshaft pin (4) co-rotatably connected to the crankshaft (14).

3. An engine in accordance with claim 1 or 2, **characterised in that** a torsion vibration damper (13) near the second annular gear (8) is co-rotatably connected to the crankshaft (14).

4. An engine in accordance with any of the preceding claims, **characterised in that** the crankshaft pin (4) is fastened to the crankshaft (14) by an axial screw (25) and presses a ring (18) bearing the second annular gear (8) and the torsion vibration damper (13) against a shoulder on the crankshaft (14).

## Revendications

1. Moteur à combustion interne comprenant un engrenage secondaire accouplé à une extrémité du vilebrequin de moteur à combustion interne (14) et dans lequel sont intégrés une machine électrique pouvant fonctionner soit comme moteur électrique soit comme générateur de courant électrique ainsi qu'un groupe auxiliaire à entraîner, l'engrenage secondaire pouvant être relié au vilebrequin (14) par un embrayage commutable (K1, 10), avec entre l'engrenage secondaire et le vilebrequin une transmission du type engrenage planétaire, notamment une boîte à glissement conique ou HIRN ou une boîte « harmonic-drive »,
**caractérisé par**
les caractéristiques suivantes :
- une roue motrice (1) de l'engrenage secondaire est solidaire en rotation à un moyeu (2) de la transmission,
- le moyeu (2) est disposé en rotation sur le vilebrequin (14) en insérant un embrayage de rattrapage (K2, 5),
- entre le moyeu (2) partiellement de forme elliptique et deux roues creuses (7, 8) à denture intérieure juxtaposées dans cette section un anneau flexible (11) à denture extérieure est prévu,
- entre la première roue creuse (7) et un logement (17) pour celle-ci prévu concentriquement dans le carter de moteur à combustion interne se situe l'embrayage commutable (K1, 10), et
- la deuxième roue creuse (8) est solidaire en rotation avec le vilebrequin (14).

2. Moteur à combustion interne selon la revendication 1,
**caractérisé en ce que**
le moyeu (2) de la transmission est logé en rotation sur un tourillon de vilebrequin (4) solidaire en rotation du vilebrequin (14), par l'intermédiaire d'un palier à roulement (3) ou un palier lisse.

3. Moteur à combustion interne selon la revendication 1 ou 2,
**caractérisé en ce qu'**
un amortisseur d'oscillations de torsion (13) est solidaire en rotation du vilebrequin (14) du voisinage de la deuxième roue creuse (8).

4. Moteur à combustion interne selon l'une quelconque des revendications précédentes,
**caractérisé en ce que**
le tourillon de vilebrequin (4) est fixé au vilebrequin (14) au moyen d'une vis axiale (25) et pousse ainsi un anneau de support (18) portant la deuxième roue creuse (8) et l'amortisseur d'oscillations de torsion (13) contre un talon du vilebrequin (14).
